# EUROPEAN PATENT APPLICATION

(11) **EP 4 675 621 A1**
(43) Date of publication of application: **07.01.2026**
(21) Application number: 24764279.6
(22) Date of filing: 26.02.2024
(51) Int. Cl.: G11B 27/031, G06F 3/0484, H04N 21/854, H04N 21/43

(54) **VIDEO EDITING METHOD AND APPARATUS, AND COMPUTER READABLE STORAGE MEDIUM**

(30) Priority: 28.02.2023 CN 202310183495
(71) Applicant: Lemon Inc., Grand Cayman, KY1-1205 (KY)
(72) Inventor: MA, Xiaotong, Beijing 100028 (CN)
(74) Representative: Isarpatent
(86) International application number: PCT/SG2024/050100
(87) International publication number: WO 2024/181916

(57) **Abstract**

The present disclosure relates to the technical field of multimedia, and specifically to a video editing method and apparatus, and a computer readable storage medium. The video editing method comprises : displaying a main menu in a video editing interface, wherein the main menu comprises a material entry control; in response to any trigger operation of a user on the material entry control, displaying the same material adding control; in response to a trigger operation of the user on the material adding control, obtaining a material added by the user; and in the video editing interface, displaying a material control corresponding to the material added by the user.

## Description

### CROSS-REFERENCE TO RELATED APPLICATIONS

The present disclosure is based on and claims priority of Chinese application for invention No. 202310183495.5, filed on Feb. 28, 2023, the disclosure of which is hereby incorporated into this disclosure by reference in its entirety.

### TECHNICAL FIELD

The present disclosure relates to the technical field of multimedia technology, and in particular, to a video editing method, a video editing method apparatus, and a computer-readable storage medium.

### BACKGROUND

A user can, through video editing software, perform clip of a video, and add media elements such as sound, text and effects for the video to enrich presentation content of the video.

A main menu of a video editing interface comprises controls corresponding to various types of media elements such as sound, text, and effects, and by triggering these controls, addition controls and editing controls for the media elements can be further displayed using one or more menu levels.

### SUMMARY

According to a first aspect of some embodiments of the present disclosure, there is provided a video editing method, comprising: displaying a main menu in a video editing interface, wherein the main menu comprises a media element entry control; in response to a triggering operation of a user on the media element entry control, displaying a media element addition control, wherein the triggering operation is any of triggering operation(s) of the user on the media element entry control, the triggering operation(s) being used to triggering the display of the same media element addition control; acquiring a media element added by the user in response to a triggering operation of the user on the media element addition control; and displaying, in the video editing interface, a media element control corresponding to the media element added by the user.

In some embodiments, the media element addition control is displayed in a form of a floating menu, the floating menu comprising a plurality of media element addition items, each of the media element addition items corresponding to a media element addition manner.

In some embodiments, the video editing method further comprises: after the floating menu is displayed, closing the floating menu in response to a triggering operation of the user on a blank area or the media element entry control in the video editing interface.

In some embodiments, the acquiring the media element added by the user in response to the triggering operation of the user on the media element addition control comprises: displaying a media element addition panel in response to a triggering operation of the user on a media element addition item in the floating menu; and determining the media element added by the user according to an interaction operation of the user with the media element addition panel.

In some embodiments, the media element addition items correspond to multiple media element addition manners of adding a sound file, adding recording, or adding a sound effect in response to the media element entry control being a sound entry control; or, the media element addition items correspond to media element addition manners of adding input text and adding a subtitle in response to the media element entry control being a text entry control.

In some embodiments, the media element addition control is a media element addition panel.

In some embodiments, the media element entry control is a picture-in-picture entry control or a effect entry control.

In some embodiments, the displaying the media element control corresponding to the media element added by the user comprises: displaying a thumbnail control, wherein the thumbnail control is associated with a plurality of media element controls and occupies a secondary track; and displaying the plurality of media element controls associated with the thumbnail control in response to a triggering operation of the user on the thumbnail control, wherein the plurality of media element controls occupy one or more secondary tracks.

In some embodiments, the plurality of media element controls associated with the thumbnail control are displayed in response to the triggering operation of the user on the thumbnail control, and the plurality of media element controls are in an unselected state.

In some embodiments, the displaying the plurality of media element controls associated with the thumbnail control in response to the triggering operation of the user on the thumbnail control comprises: determining a video time point corresponding to a triggering point of the user on the thumbnail control in response to the triggering operation of the user on the thumbnail control; moving a main track and the one or more secondary tracks to locate the video time point at a target position; and displaying, in the moved one or more secondary track, the plurality of media element controls associated with the thumbnail control.

In some embodiments, the plurality of media element controls associated with the thumbnail control belong to a same type, wherein media element controls of the same type are added through a same media element entry control.

In some embodiments, a style of the thumbnail control corresponds to the type to which the media element controls associated with the thumbnail control belong, the style comprising at least one of a texture, an icon, or a character.

In some embodiments, the displaying the plurality of media element controls associated with the thumbnail control in response to the triggering operation of the user on the thumbnail control comprises: displaying the plurality of media element controls associated with the thumbnail control and a media element editing component and hiding the main menu in response to the triggering operation of the user on the thumbnail control, wherein the media element editing component comprises one or more media element editing controls.

In some embodiments, the video editing method further comprises: hiding the main menu and displaying a media element editing component in response to a triggering operation of the user on the media element control or in response to displaying the media element control corresponding to the media element added by the user, wherein the media element editing component comprises one or more media element editing controls.

In some embodiments, the media element editing component further comprises a return control for closing the media element editing component and displaying the main menu.

In some embodiments, the video editing method further comprises: closing the media element editing component and displaying the main menu in response to a triggering operation of the user on a blank area in the video editing interface.

In some embodiments, the video editing method further comprises: decreasing brightness of an un-triggered media element control or increasing transparency of the un-triggered media element control in response to the triggering operation of the user on the media element control.

In some embodiments, the video editing method further comprises: moving the media element control to a target secondary track in response to a moving operation of the user on the media element control.

In some embodiments, the displaying a media element control corresponding to the media element added by the user comprises: displaying, in a secondary track, the media element control corresponding to the media element added by the user.

In some embodiments, the video editing method further comprises: in response to the plurality of media element controls being located on a same secondary track and having a temporal overlap, determining a layer sequence of the media element controls according to a sequence of adding the media element controls, and displaying the plurality of added media element controls according to the layer sequence.

According to a second aspect of some embodiments of the present disclosure, there is provided a video editing apparatus comprising: a memory; and a processor coupled to the memory, the processor being configured to perform, based on instructions stored in the memory, any of the video editing methods described above.

According to a third aspect of some embodiments of the present disclosure, there is provided a computer-readable storage medium having thereon stored a computer program which, when executed by a processor, implements any of the video editing methods described above.

According to a fourth aspect of some embodiments of the present disclosure, there is provided a computer program product which, when running on a computer, causes the computer to implement any of the video editing methods described above.

According to a fifth aspect of some embodiments of the present disclosure, there is provided a computer program, including: instructions that, when executed by a processor, cause the processor to perform any of the video editing methods described above.

Other features of the present disclosure and advantages thereof will become apparent from the following detailed description of exemplary embodiments thereof, which proceeds with reference to the accompanying drawings.

### BRIEF DESCRIPTION OF THE DRAWINGS

In order to more clearly illustrate the embodiments of the present disclosure or the technical solutions in the prior art, the drawings that need to be used in the description of the embodiments or the prior art will be briefly described below, and it is obvious that the drawings in the following description are only some embodiments of the present disclosure, and for those skilled in the art, other drawings may be obtained according to the drawings without paying inventive labor.
Fig. 1 illustrates a schematic flow diagram of a video editing method according to some embodiments of the present disclosure.
Figs. 2A to 2D exemplarily illustrates schematic diagrams of a video editing interface.
Fig. 3 illustrates a schematic structural diagram of a video editing apparatus according to some embodiments of the present disclosure.
Fig. 4 illustrates a schematic structural diagram of a video editing apparatus according to other embodiments of the present disclosure.
Fig. 5 illustrates a schematic structural diagram of a video editing apparatus according to further embodiments of the present disclosure.

### DETAILED DESCRIPTION

The technical solutions in the embodiments of the present disclosure will be described clearly and completely in conjunction with the drawings in the embodiments of the present disclosure, and it is obvious that the embodiments described are only some embodiments of the present disclosure, rather than all embodiments. The following description of at least one exemplary embodiment is merely illustrative in nature and is in no way intended to limit this disclosure and its application or uses. All other embodiments, which are obtained by those skilled in the art based on the embodiments of the present disclosure without making creative labor, shall fall within the scope of protection of the present disclosure.

The relative arrangements, numerical expressions and numerical values of components and steps set forth in these embodiments do not limit the scope of the present disclosure unless specifically stated otherwise.

Meanwhile, it should be understood that a size of each portion shown in the drawings is not drawn according to an actual scale for the convenience of description.

Techniques, methods, and devices known to one of ordinary skill in the related art might not be discussed in detail but the techniques, methods, and devices should be considered as part of the description where appropriate.

In all examples shown and discussed herein, any specific value should be construed as exemplary only and not as limiting. Therefore, other examples of the exemplary embodiment may have different values.

It should be noted that: similar reference numbers and letters refer to similar items in the following drawings, and thus, once a certain item is defined in one drawing, it need not be discussed further in subsequent drawings.

In the related art, when a user triggers a control in a main menu for the first time and triggers the control in the main menu for the non-first time, different results will be obtained. For example, when a user clicks "effects" in a main menu for the first time, an effect selection panel is directly invoked for the user to select an effect for addition; and when the user clicks "effects" again, a submenu will be invoked, in which a button of "add effects" is comprised so that the user needs to click "add effects" to invoke the effect selection panel again. Therefore, the same operation on the same media element entry might bring different feedback, which makes it difficult for users to understand and even brings confusion to some users. This increases a probability of user misoperation, and then reduces efficiency of video editing.

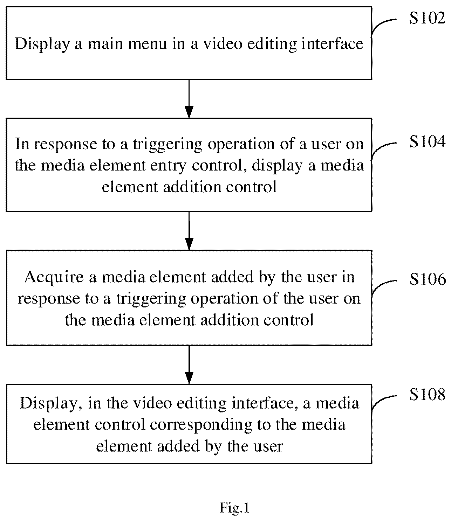

Fig. 1 illustrates a schematic flow diagram of a video editing method according to some embodiments of the present disclosure. This embodiment can be executed by a terminal, for example, a mobile phone, a tablet computer, a personal computer, and the like. As shown in Fig. 1, the video editing method of this embodiment comprises steps S102 to S108.

In step S102, a main menu is displayed in a video editing interface, wherein the main menu comprises a media element entry control.

The main menu, which may also be referred to as a root menu, has one or more media element entry controls deployed thereon. In some embodiments, each of the one or more media element entry controls corresponds to one type of media elements, for example, the main menu may comprise entry control(s) corresponding to at least one type of audio, text, picture-in-picture, effect, etc.

In step S104, in response to a triggering operation of a user on the media element entry control, a media element addition control is displayed, wherein the triggering operation is any of triggering operation(s) of the user on the media element entry control, the triggering operation(s) being used to triggering the display of the same media element addition control. The triggering operation of the user is, for example, a click operation, or the like.

That is, a first trigger, a second trigger, and any possibly-generated subsequent trigger on a certain media element entry control, all give the user the same feedback. However, for different media element entry controls, different media element addition controls may be displayed after the triggers.

For example, for a media element entry control 1, after the user performs any trigger of multiple times of triggers on this control, a media element addition control 1 is displayed; and for a media element entry control 2, after the user performs any trigger of multiple times on this control, a media element addition control 2 is displayed. The media element addition control 1 and the media element addition control 2 may be the same or different, which is not limited in this disclosure.

In step S106, a media element added by the user is acquired in response to a triggering operation of the user on the media element addition control.

The user can select the media element that he/she desires to add into a video. For example, the user selects a picture from a local picture library, selects a piece of music from a network music library, selects a effect from a effect library, and so on.

In step S108, in the video editing interface, a media element control is displayed corresponding to the media element added by the user.

The media element control is a triggerable control, and may be an operation entry for the media element, for example, an entry to perform operations such as editing and deleting, to facilitate more flexible control of the user over the added media element.

In some embodiments, brightness of an un-triggered media element control is decreased or transparency of the un-triggered media element control in increased in response to the triggering operation of the user on the media element control. In addition, a triggered media element control can be subjected to processing beneficial to focusing of the user, such as highlighting and adding a selection box, so that the user can make sure the currently processed object, and a probability of misoperation is reduced.

In addition to adding the media element control, an effect that the added media element is applied to the edited video may be viewed in real time through a preview window.

In the embodiments of the present disclosure, the media element entry is taken as an entry to add the media element, and the same media element addition control is displayed regardless of the number of triggers of the user on the media element entry. Therefore, the feedback of the user on the operation for the media element entry in the main menu is definite, which is easy for the user to understand and reduces a probability of user misoperation, so that efficiency of the video editing is improved. In this way, both terminal resources and network resources of the user can be saved.

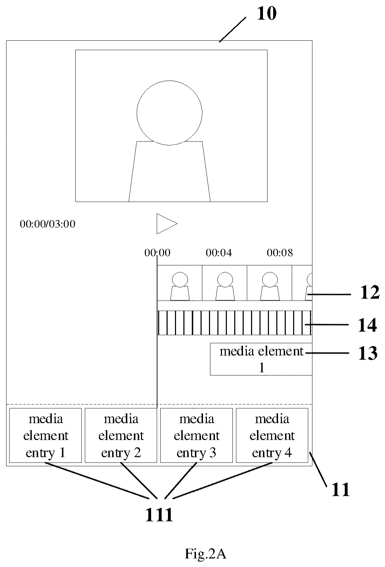

Fig. 2A exemplarily illustrates a schematic diagram of a video editing interface in a state. As shown in Fig. 2A, the video editing interface 10 comprises a main menu 11 in which a plurality of media element entry controls 111 are comprised, for example, media element entry controls corresponding to a media element entry 1, a media element entry 2, a media element entry 3, and a media element entry 4.

In some embodiments, the media element addition control is displayed in a form of a floating menu, the floating menu comprising a plurality of media element addition items, each of the media element addition items corresponding to a media element addition manner. When the floating menu is displayed, the main menu is still in a display state.

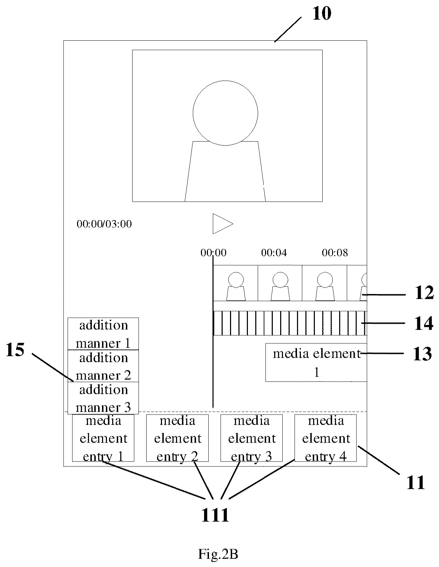

For example, the media element entry 1 in Fig. 2A corresponds to a plurality of addition manners, such as addition manners 1 to 3. After the user triggers the media element entry 1, the video editing interface 10 may, as shown in Fig. 2B, over the media element entry 1, display a floating menu 15, where media element addition items corresponding to the three addition manners are comprised. A specific location of the floating menu is not limited to the manner shown in Fig. 2B, and can be set by those skilled in the art as needed.

The media element addition control is presented by using the floating menu, so that the media element addition function of the media element entry is represented more clearly and definitely, and in the case where the main menu is not closed, the user can be further prompted to select the media element addition manner, which clarifies the level of the menu, reduces a probability of user misoperation, so that efficiency of the video editing is improved.

In some embodiments, after the floating menu is displayed, the floating menu is closed in response to a triggering operation of the user on a blank area or the media element entry control in the video editing interface. The blank area refers to an area that does not comprise any control. Therefore, the user can, in many more and more concise manners, return to the level of the main menu from the state that the media element is to be added, which reduces a probability of user misoperation, so that efficiency of the video editing is improved.

In some embodiments, a media element addition panel is displayed in response to a triggering operation of the user on a media element addition item in the floating menu; and the media element added by the user is determined according to an interaction operation of the user with the media element addition panel. The media element addition panel may be a selection panel (comprising a plurality of media elements to be selected) or an input panel (comprising controls for inputting text, sound, and other content), which may occupy a partial or entire area of the video editing interface.

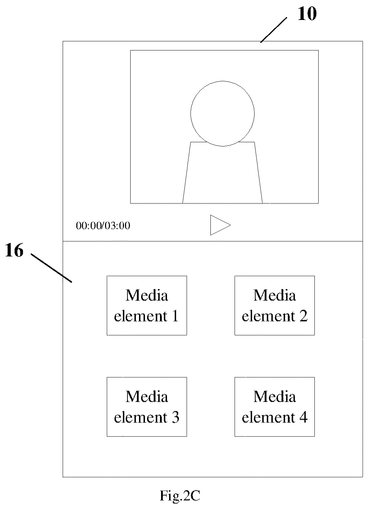

For example, after the user clicks the addition manner 1 in the floating menu 15 of Fig. 2B, the video editing interface 10 may display a media element addition panel 16 as shown in Fig. 2C. If the user selects a media element 3, the media element 3 will be added into the edited video. Meanwhile, in the video editing interface 10, a media element control corresponding to the media element 3 may be displayed.

From the above process, it can be seen that for the media element with the plurality of the addition manners, the user determines, after triggering the media element entry control, the added media element through the operations on the two controls for the floating menu and the media element addition panel. However, since the floating menu coexists with the main menu in the form of floating, no visual jump is brought to the user in the processes of displaying the floating menu and operating the floating menu. Therefore, understanding cost of the user is reduced, and convenience of user interaction is improved.

In some embodiments, the media element with the plurality of addition manners is sound or text. For example, for a sound entry control, the addition manner comprises more than one of adding a sound file (e.g., adding locally or from a network), adding recording (e.g., invoking a recording function for the user to record audio immediately), or adding a sound effect (e.g., adding from a sound effect library provided by a video editing application). For another example, for a text entry control, the addition manner comprises entering text and adding a subtitle. Therefore, for the media element type with a variety of media element sources, such as sound or text, more choices can be provided to the user, to improve flexibility of the video editing.

In some embodiments, the media element addition control is a media element addition panel. For example, in the case where a media element corresponding to the media element entry has one addition manner, a media element addition panel is displayed in response to a triggering operation of the user on the media element entry control, wherein the triggering operation is any of triggering operation(s) of the user on the media element entry control, the triggering operation(s) being used to triggering the display of the same media element addition panel. For example, it is assumed that a media element corresponding to the media element entry 3 in Fig. 2A has only one addition manner. After the user triggers the media element entry 3, the video editing interface 10 can jump directly to a state in Fig. 2C, i.e. displaying the media element addition panel 16, without comprising any other menu level therein. Therefore, the user can directly invoke the media element addition panel by triggering the media element entry control, so that the menu level is simplified, and efficiency of the video editing is improved.

In some embodiments, in a case where the media element entry control is a picture-in-picture entry control or an effect entry control, the media element addition control is the media element addition panel. Media elements of picture-in-picture and effect types have single acquisition paths, so that addition processes of the media elements of the two types can be simplified.

The video editing interface may comprise a main track and secondary track(s). The main track is used for displaying a control corresponding to the edited video (or referred to as a main video), and the secondary track(s) are used for displaying the media element control(s) corresponding to the media element(s) added into the main video. The tracks has a timeline to represent content of the main video or media element at a same time point.

As shown in Fig. 2A, the main video is located in a main track 12, and in the secondary track, there is a media element control 13, for example, a media element control corresponding to a media element 1 is comprised, the media element 1 starts to function from the 3rd second of the video.

In some embodiments, a plurality of secondary tracks may be compressed. In some embodiments, a thumbnail control is displayed, wherein the thumbnail control is associated with a plurality of media element controls and occupies a secondary track; and the plurality of media element controls associated with the thumbnail control are displayed in response to a triggering operation of the user on the thumbnail control, wherein the plurality of media element controls occupy one or more secondary tracks.

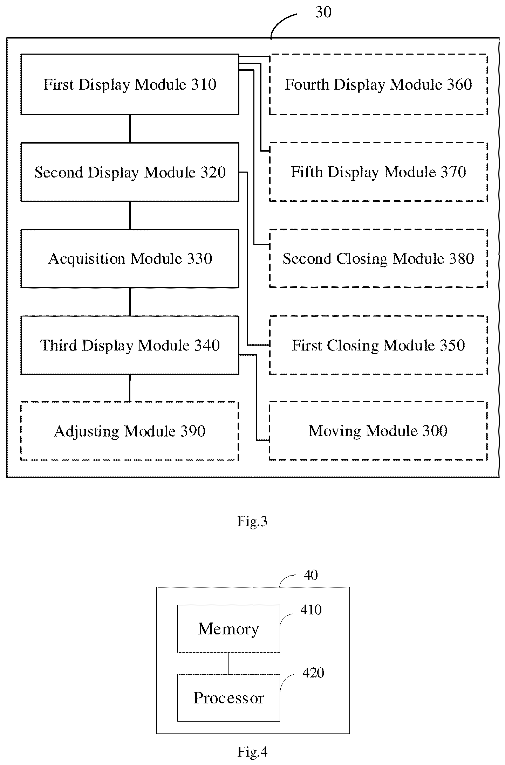

For example, in Fig. 2A, a thumbnail control 14 is associated with media elements 2, 3, and 4 and occupies one secondary track. When the user triggers the thumbnail control 14, as shown in Fig. 4D, the thumbnail control 14 is hidden, and media element controls 13 corresponding to the media elements 2, 3, and 4 are displayed, and each media element control occupies one track.

The thumbnail control also occupies one secondary track, so that it is in a same form as the track occupied by an ordinary media element. In this way, the user can easily understand that the content contained therein are media elements, so it is easy for the user to search and determine the media element control that he desires to operate, and reduces a probability of misoperation. Moreover, in a case of more media elements, the video editing interface can be simplified. Therefore, efficiency of the video editing is improved.

In some embodiments, the plurality of media element controls associated with the thumbnail control are displayed in response to the triggering operation of the user on the thumbnail control, and the plurality of media element controls are in an unselected state. That is, after the user triggers the thumbnail control, any of the media element controls is not selected by default. Misoperation caused by default selection of a certain media element control in the case where the user only wants to browse the compressed media element controls is avoided. Therefore, efficiency of the video editing can be improved.

The compressed media element controls may be part or all of the media element controls added by the user. For example, the compressed media element controls are of a same type. A style of the thumbnail control may correspond to the type to which its associated media element controls belong, the style comprising at least one of a texture, an icon, or a character. For example, for media element controls of a sound type, a thumbnail control thereof can have a texture with an audio waveform, to enable the user to clearly and quickly know content therein, so that a probability of user misoperation is reduced.

In some embodiments, a video time point corresponding to a triggering point of the user on the thumbnail control is determined in response to the triggering operation of the user on the thumbnail control; a main track and the one or more secondary tracks are moved to locate the video time point at a target position; and in the moved one or more secondary track, the plurality of media element controls associated with the thumbnail control are displayed. Therefore, the position triggered by the user can be moved to the target position, for example, a central axis of the video editing interface, so that a position interested by the user can be subjected to clearer presentation.

In some embodiments, the media element control is moved to a target secondary track in response to a moving operation of the user on the media element control. For example, in a case where there are a plurality of tracks for picture-in-picture media elements, a certain picture-in-picture media element control can be moved to another secondary track through long pressing and a moving operation, which can facilitate user's control and management of the media element, so that a probability of misoperation is reduced.

In some embodiments, in response to the plurality of media element controls being located on a same secondary track and having a temporal overlap, a layer sequence of the media element controls is determined according to a sequence of adding the media element controls, and the plurality of added media element controls are displayed according to the layer sequence. Therefore, the user can determine the sequence of adding the media elements according to a superposition effect of the media element controls, which can facilitate user's control and management of the media elements, so that a probability of misoperation is reduced.

The embodiments of the present disclosure also exemplarily provide several manners of media element editing.

In some embodiments, in response to a triggering operation of the user on the thumbnail control, the plurality of media element controls associated with the thumbnail control and a media element editing component are displayed, and the main menu is hidden, wherein the media element editing component comprises one or more media element editing controls.

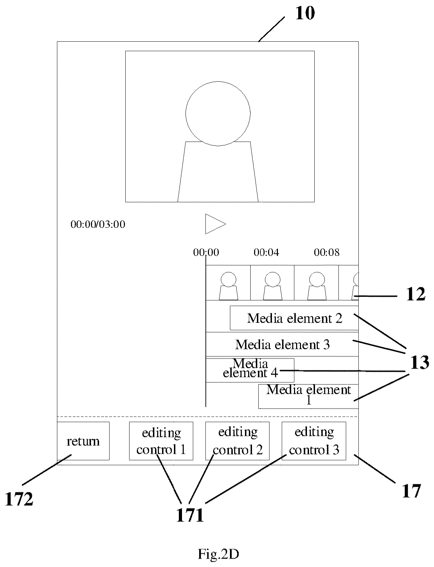

As shown in Figs. 2A and 2D, when the media element controls 13 corresponding to the media elements 2, 3, and 4 are displayed by triggering, by the user, the thumbnail control 14, a media element editing component 17 is simultaneously displayed, which comprise three editing controls 171, namely, editing controls 1 to 3 respectively. For example, when the user triggers a sound-type thumbnail control, while media elements associated with the thumbnail control are displayed, an editing control for sound, such as volume, speed, and gradual change, can also be displayed, thereby facilitating the user quickly knowing the editing manner for the media element and entering an editable state. Therefore, efficiency of the video editing is improved.

In some embodiments, in response to the triggering operation of the user on the media element control, the main menu is hidden and the media element editing component is displayed, wherein the media element editing component comprises one or more media element editing controls. Taking Fig. 2D as an example, when the user triggers any media element control in media element controls of media elements 1 to 4, a media element editing control corresponding to the media element control may be displayed, for example, a sound editing control is displayed for a sound media element, a text editing control is displayed for a text media element, and the like.

In some embodiments, the main menu is hidden and the media element editing component is displayed in response to displaying the media element control corresponding to the media element added by the user, wherein the media element editing component comprises one or more media element editing controls. Therefore, after a certain media element is added by the user, an editing state of the media element is automatically entered, to facilitate the user quickly editing the media element just added.

The embodiments of the present disclosure also exemplarily provide two embodiments of closing the media element editing component. These two approaches may be implemented alternatively, or jointly, in a video editing application.

In some embodiments, the media element editing component further comprises a return control for closing the media element editing component and displaying the main menu. The return control may be illustrated as a control 172 of Fig. 2D. This approach is easy for the user to understand.

In some embodiments, the media element editing component is closed and the main menu is displayed in response to a triggering operation of the user on the blank area in the video editing interface. The operation area for this approach is large, so that a probability of misoperation of the user is low.

Another closing approach may be used by those skilled in the art as needed, and will not be described herein.

According to the above embodiment, the video editing interface directly jumps to the main menu without passing through the media element addition control when the media element editing component is closed. That is, according to the embodiment of the present disclosure, the separation processing of the menus for media element addition and media element editing is realized, which simplifies the menu level, and improves efficiency of the video editing.

An embodiment of a video editing apparatus of the present disclosure is described below with reference to Fig. 3.

Fig. 3 illustrates a schematic structural diagram of a video editing apparatus according to some embodiments of the present disclosure. As shown in Fig. 3, the video editing apparatus 30 of this embodiment comprises: a first display module 310 configured to display a main menu in a video editing interface, wherein the main menu comprises a media element entry control; a second display module 320 configured to, in response to a triggering operation of a user on the media element entry control, display a media element addition control, wherein the triggering operation is any of triggering operation(s) of the user on the media element entry control, the triggering operation(s) being used to triggering the display of the same media element addition control; an acquisition module 330 configured to acquire a media element added by the user in response to a triggering operation of the user on the media element addition control; and a third display module 340 configured to display, in the video editing interface, a media element control corresponding to the media element added by the user.

In some embodiments, the media element addition control is displayed in a form of a floating menu, the floating menu comprising a plurality of media element addition items, each of the media element addition items corresponding to a media element addition manner.

In some embodiments, the video editing apparatus 30 further comprises: a first closing module 350 configured to, after the floating menu is displayed, close the floating menu in response to a triggering operation of the user on a blank area or the media element entry control in the video editing interface.

In some embodiments, the acquisition module 330 is further configured to display a media element addition panel in response to a triggering operation of the user on a media element addition item in the floating menu; and determine the media element added by the user according to an interaction operation of the user with the media element addition panel.

In some embodiments, the media element addition items correspond to multiple media element addition manners of adding a sound file, adding recording, or adding a sound effect in response to the media element entry control being a sound entry control; or, the media element addition items correspond to media element addition manners of adding input text and adding a subtitle in response to the media element entry control being a text entry control.

In some embodiments, the media element addition control is a media element addition panel.

In some embodiments, the media element entry control is a picture-in-picture entry control or an effect entry control.

In some embodiments, the third display module 340 is further configured to display a thumbnail control, wherein the thumbnail control is associated with a plurality of media element controls and occupies a secondary track; and display the plurality of media element controls associated with the thumbnail control in response to a triggering operation of the user on the thumbnail control, wherein the plurality of media element controls occupy one or more secondary tracks.

In some embodiments, the third display module 340 is further configured to display the plurality of media element controls associated with the thumbnail control in response to the triggering operation of the user on the thumbnail control, and the plurality of media element controls are in an unselected state.

In some embodiments, the third display module 340 is further configured to determine a video time point corresponding to a triggering point of the user on the thumbnail control in response to the triggering operation of the user on the thumbnail control; move a main track and the one or more secondary tracks to locate the video time point at a target position; and display, in the moved one or more secondary track, the plurality of media element controls associated with the thumbnail control.

In some embodiments, the plurality of media element controls associated with the thumbnail control belong to a same type, wherein media element controls of the same type are added through a same media element entry control.

In some embodiments, a style of the thumbnail control corresponds to the type to which the media element controls associated with the thumbnail control belong, the style comprising at least one of a texture, an icon, or a character.

In some embodiments, the third display module 340 is further configured to display the plurality of media element controls associated with the thumbnail control and a media element editing component and hiding the main menu in response to the triggering operation of the user on the thumbnail control, wherein the media element editing component comprises one or more media element editing controls.

In some embodiments, the video editing apparatus 30 further comprises: a fourth display module 360 configured to, hide the main menu and displaying a media element editing component in response to a triggering operation of the user on the media element control, wherein the media element editing component comprises one or more media element editing controls.

In some embodiments, the video editing apparatus 30 further comprises: a fifth display module 370 configured to hide the main menu and displaying a media element editing component in response to displaying the media element control corresponding to the media element added by the user, wherein the media element editing component comprises one or more media element editing controls.

In some embodiments, the media element editing component further comprises a return control for closing the media element editing component and displaying the main menu.

In some embodiments, the video editing apparatus 30 further comprises: a second closing module 380 configured to close the media element editing component and display the main menu in response to a triggering operation of the user on a blank area in the video editing interface.

In some embodiments, the video editing apparatus 30 further comprises: an adjusting module 390 configured to decrease brightness of an un-triggered media element control or increase transparency of the un-triggered media element control in response to the triggering operation of the user on the media element control.

In some embodiments, the video editing apparatus 30 further comprises: a moving module 300 configured to move the media element control to a target secondary track in response to a moving operation of the user on the media element control.

In some embodiments, the third display module 340 is further configured to display, in a secondary track, the media element control corresponding to the media element added by the user.

In some embodiments, the third display module 340 is further configured to, in response to the plurality of media element controls being located on a same secondary track and having a temporal overlap, determine a layer sequence of the media element controls according to a sequence of adding the media element controls, and displaying the plurality of added media element controls according to the layer sequence.

Fig. 4 illustrates a schematic structural diagram of a video editing apparatus according to other embodiments of the present disclosure. As shown in Fig. 4, the video editing apparatus 40 of this embodiment comprises: a memory 410 and a processor 420 coupled to the memory 410, the processor 420 being configured to perform, based on instructions stored in the memory 410, the video editing method according to any of the above embodiments.

The memory 410 may comprise, for example, a system memory, a fixed non-volatile storage medium, and the like. The system memory has thereon stored, for example, an operating system, an application, a boot loader, other programs, and the like.

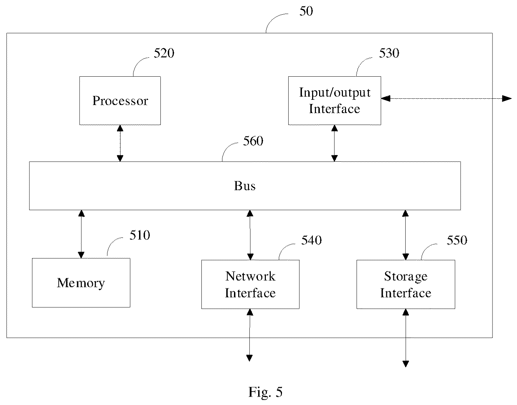

Fig. 5 illustrates a schematic structural diagram of a video editing apparatus according to further embodiments of the present disclosure. As shown in Fig. 5, the video editing apparatus 50 of this embodiment comprises: a memory 510 and a processor 520, and may further comprise an input/output interface 530, a network interface 540, a storage interface 550, and the like. These interfaces 530, 540, 550 and the memory 510 may be connected with the processor 520, for example, through a bus 560. The input/output interface 530 provides a connection interface for input/output devices such as a display, a mouse, a keyboard, and a touch screen. The network interface 540 provides a connection interface for various networking devices. The storage interface 550 provides a connection interface for external storage devices such as an SD card and a USB flash disk.

The embodiments of the present disclosure further provide a computer-readable storage medium having a computer program stored thereon, characterized in that the program, when executed by a processor, implements any of the above video editing methods.

It should be appreciated by those skilled in the art that, the embodiments of the present disclosure may be provided as a method, system, or computer program product. Accordingly, the present disclosure may take a form of an entire hardware embodiment, an entire software embodiment, or an embodiment combining software and hardware aspects. Moreover, the present disclosure may take a form of a computer program product implemented on one or more computer-usable non-transitory storage media (including, but not limited to, a disk memory, CD-ROM, optical memory, etc.) having computer-usable program code embodied therein.

The present disclosure is described with reference to flow diagrams and/or block diagrams of the method, apparatus (system) and computer program product according to the embodiments of the present disclosure. It should be understood that each flow and/or block of the flow diagrams and/or block diagrams, and a combination of flows and/or blocks in the flow diagrams and/or block diagrams, can be implemented by computer program instructions. These computer program instructions may be provided to a processor of a general-purpose computer, special-purpose computer, embedded processor, or other programmable data processing devices to produce a machine, such that the instructions which are executed through the processor of the computer or other programmable data processing devices create means for implementing the functions specified in one or more flows of the flow diagrams and/or one or more blocks of the block diagrams.

These computer program instructions may also be stored in a computer-readable memory that can guide a computer or other programmable data processing devices to work in a specific manner, such that the instructions stored in the computer-readable memory produce an article of manufacture including instruction means which implement the functions specified in one or more flows of the flow diagrams and/or one or more blocks of the block diagrams.

These computer program instructions may also be loaded onto a computer or other programmable data processing devices to cause a series of operational steps to be performed on the computer or other programmable devices to produce a computer-implemented process, such that the instructions which are executed on the computer or other programmable devices provide steps for implementing the functions specified in one or more flows of the flow diagrams and/or one or more blocks of the block diagrams.

The above description is only preferred embodiments of the present disclosure and not used for limiting the present disclosure, and any modifications, equivalent substitutions, improvements and the like that are made within the spirit and scope of the present disclosure should be comprised within the scope of protection of the present disclosure.

## Claims

1. A video editing method, comprising:
displaying a main menu in a video editing interface, wherein the main menu comprises a media element entry control;
in response to a triggering operation of a user on the media element entry control, displaying a media element addition control, wherein the triggering operation is any of triggering operation(s) of the user on the media element entry control, the triggering operation(s) being used to triggering the display of the same media element addition control;
acquiring a media element added by the user in response to a triggering operation of the user on the media element addition control; and
displaying, in the video editing interface, a media element control corresponding to the media element added by the user.

2. The video editing method according to claim 1, wherein the media element addition control is displayed in a form of a floating menu, the floating menu comprising a plurality of media element addition items, each of the media element addition items corresponding to a media element addition manner.

3. The video editing method according to claim 2, further comprising:
after the floating menu is displayed, closing the floating menu in response to a triggering operation of the user on a blank area or the media element entry control in the video editing interface.

4. The video editing method according to claim 2 or 3, wherein the acquiring the media element added by the user in response to the triggering operation of the user on the media element addition control comprises:
displaying a media element addition panel in response to a triggering operation of the user on a media element addition item in the floating menu; and
determining the media element added by the user according to an interaction operation of the user with the media element addition panel.

5. The video editing method according to any of claims 2 to 4, wherein:
the media element addition items correspond to multiple media element addition manners of adding a sound file, adding recording, or adding a sound effect in response to the media element entry control being a sound entry control; or,
the media element addition items correspond to media element addition manners of adding input text and adding a subtitle in response to the media element entry control being a text entry control.

6. The video editing method according to any of claims 1 to 5, wherein the media element addition control is a media element addition panel.

7. The video editing method according to claim 6, wherein the media element entry control is a picture-in-picture entry control or an effect entry control.

8. The video editing method according to any of claims 1 to 7, wherein the displaying the media element control corresponding to the media element added by the user comprises:
displaying a thumbnail control, wherein the thumbnail control is associated with a plurality of media element controls and occupies a secondary track; and
displaying the plurality of media element controls associated with the thumbnail control in response to a triggering operation of the user on the thumbnail control, wherein the plurality of media element controls occupy one or more secondary tracks.

9. The video editing method according to claim 8, wherein the plurality of media element controls associated with the thumbnail control are displayed in response to the triggering operation of the user on the thumbnail control, and the plurality of media element controls are in an unselected state.

10. The video editing method according to claim 8 or 9, wherein the displaying the plurality of media element controls associated with the thumbnail control in response to the triggering operation of the user on the thumbnail control comprises:
determining a video time point corresponding to a triggering point of the user on the thumbnail control in response to the triggering operation of the user on the thumbnail control;
moving a main track and the one or more secondary tracks so that the video time point is located at a target position; and
displaying, in the moved one or more secondary track, the plurality of media element controls associated with the thumbnail control.

11. The video editing method according to any of claims 8 to 10, wherein the plurality of media element controls associated with the thumbnail control belong to a same type, wherein media element controls of the same type are added through a same media element entry control.

12. The video editing method according to claim 11, wherein a style of the thumbnail control corresponds to the type to which the media element controls associated with the thumbnail control belong, the style comprising at least one of a texture, an icon, or a character.

13. The video editing method according to claim 11 or 12, wherein the displaying the plurality of media element controls associated with the thumbnail control in response to the triggering operation of the user on the thumbnail control comprises:
displaying the plurality of media element controls associated with the thumbnail control and a media element editing component and hiding the main menu in response to the triggering operation of the user on the thumbnail control, wherein the media element editing component comprises one or more media element editing controls.

14. The video editing method according to any of claims 1 to 13, further comprising:
hiding the main menu and displaying a media element editing component in response to a triggering operation of the user on the media element control, wherein the media element editing component comprises one or more media element editing controls.

15. The video editing method according to any of claims 1 to 14, further comprising:
hiding the main menu, and displaying the media element editing component in response to displaying the media element control corresponding to the media element added by the user, wherein the media element editing component comprises one or more media element editing controls.

16. The video editing method according to any of claims 13 to 15, wherein the media element editing component further comprises a return control for closing the media element editing component and displaying the main menu.

17. The video editing method according to any of claims 13 to 16, further comprising:
closing the media element editing component and displaying the main menu in response to a triggering operation of the user on a blank area in the video editing interface.

18. The video editing method according to any of claims 1 to 17, further comprising:
decreasing brightness of an un-triggered media element control or increasing transparency of the un-triggered media element control in response to the triggering operation of the user on the media element control.

19. The video editing method according to any of claims 1 to 18, further comprising:
moving the media element control to a target secondary track in response to a moving operation of the user on the media element control.

20. The video editing method according to any of claims 1 to 19, wherein the displaying a media element control corresponding to the media element added by the user comprises:
displaying, in a secondary track, the media element control corresponding to the media element added by the user.

21. The video editing method according to any of claims 8 to 20, further comprising:
in response to the plurality of media element controls being located on a same secondary track and having a temporal overlap, determining a layer sequence of the media element controls according to a sequence of adding the media element controls, and displaying the plurality of added media element controls according to the layer sequence.

22. A video editing apparatus comprising:
a memory; and
a processor coupled to the memory, the processor being configured to perform, based on instructions stored in the memory, the video editing method according to any of claims 1 to 21.

23. A computer-readable storage medium having thereon stored a computer program which, when executed by a processor, implements the video editing method according to any of claims 1 to 21.

24. A computer program product which, when running on a computer, causes the computer to implement the video editing method according to any of claims 1 to 21.

25. A computer program, comprising:
instructions that, when executed by a processor, cause the processor to perform the video editing method according to any of claims 1 to 21.
